# EUROPÄISCHE PATENTSCHRIFT

(11) **EP 3 000 671 B1**
(45) Veröffentlichungstag und Bekanntmachung des Hinweises auf die Patenterteilung: **21.09.2016**
(21) Anmeldenummer: 15002117.8
(22) Anmeldetag: 16.07.2015
(51) Int. Cl.: B60T 7/20, B60T 13/08, B60T 13/66, B60T 13/68

(54) **AUFLAUFBREMSANLAGE FÜR KRAFTFAHRZEUGANHÄNGER**
OVERRUN BRAKE FOR A MOTOR VEHICLE TRAILER
INSTALLATION DE FREIN A INERTIE POUR REMORQUE DE VEHICULE AUTOMOBILE

(30) Priorität: 11.09.2014 DE 202014007403 U
(43) Veröffentlichungstag der Anmeldung: 30.03.2016
(73) Patentinhaber: Knott GmbH, D-83125 Eggstätt (DE)
(72) Erfinder: Strasser, Josef, 83257 Gstadt am Chiemsee (DE)
(74) Vertreter: Bauer, Friedrich

(56) Entgegenhaltungen:
- EP-B1- 1 308 358
- DE-A1- 2 148 384
- DE-A1-102006 003 739
- DE-T2- 60 001 778
- US-A1- 2004 160 116

## Beschreibung

Die Erfindung betrifft eine Auflaufbremsanlage für Kraftfahrzeuganhänger wie beispielsweise Caravan- oder Bootsanhänger. Bei solchen Auflaufbremsanlagen werden beim Bremsen des Zugfahrzeugs die Radbremsen des Anhängers aktiviert, indem die Zugstange des Anhängers gegen die Kraft einer Feder um einen gewissen Auflaufweg eingeschoben wird.

Aus der EP 1 308 358 B1 ist eine solche Auflaufbremsanlage für Kraftfahrzeuganhänger bekannt. Damit beim normalen Zurücksetzen des Anhängers die Auflaufbremsanlage nicht aktiviert wird, sind neben mechanisch zu betätigenden Rückfahrsperren auch automatische Rückfahrsysteme für Auflaufbremsanlagen mit hydraulischer Bremskraftübertragungseinrichtung bekannt, bei denen das elektrische Signal der Rückfahrleuchte des Zugfahrzeuges und der Radsensoren verwendet werden, um ein eine Rückfahrbewegung zu erkennen und das Bremsen der Räder beim Zurücksetzen des Anhängers zu verhindern. Dies erfolgt über ein elektromagnetisches Ventil, das in die Übertragungseinrichtung der Auflaufbremsanlage eingebaut ist und durch den am Ausgang des Schalters für den Rückfahrscheinwerfer abgegriffenen elektrischen Strom betätigt wird.

Obwohl dies eine geeignete technische Lösung darstellt, ist sie hinsichtlich der Kosten, die für die einzelnen Komponenten und für die Verkabelung anfallen, verbesserungswürdig.

Der Erfindung liegt daher die Aufgabe zugrunde, eine Auflaufbremsanlage für Kraftfahrzeuganhänger zu schaffen, bei der ein Stillstand und eine Rückfahrbewegung des Kraftfahrzeuganhängers auf möglichst zuverlässige und kostengünstige Weise erkannt und für die Steuerung der Auflaufbremsanlage verwendet werden kann.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Die erfindungsgemäße Auflaufbremsanlage für Kraftfahrzeuganhänger umfasst dabei eine hydraulische Bremskraftübertragungseinrichtung, eine Steuereinheit, ein in der Bremskraftübertragungseinrichtung angeordnetes Umschaltventil, das von der Steuereinheit in Abhängigkeit der Bewegungsrichtung des Kraftfahrzeuganhängers geschaltet ist, und ein Bewegungserkennungssystem zum Erkennen des Stillstands oder einer Bewegungsrichtung des Kraftfahrzeuganhängers. Das Bewegungserkennungssystem umfasst dabei eine die Fahrbahnoberfläche abtastende Radareinheit.

Durch die erfindungsgemäße, die Fahrbahnoberfläche abtastende Radareinheit kann sicher erkannt werden, ob der Kraftfahrzeuganhänger in Vorwärtsrichtung oder in Rückwärtsrichtung bewegt wird oder sich im Stillstand befindet. Eine solche Radareinheit kann außerdem leicht nachgerüstet werden. Besonders vorteilhaft ist hierbei, dass hierdurch eine relativ kostengünstige Bewegungserkennungseinrichtung geschaffen wird, da die Kosten für Radsensoren, Polräder und eine aufwendige Verkabelung vermieden werden können.

Weiterhin ist es besonders vorteilhaft, wenn der von der zumindest einen Radareinheit abgegebene Strahlungskegel schräg nach hinten in Richtung der Fahrbahnoberfläche gerichtet ist. Dadurch, dass die zumindest eine Radareinheit die Umgebung in die Richtung abtastet, in die im Fall des Zurücksetzens des Anhängers zurückgesetzt wird, ist sichergestellt, dass bei einer normalen Vorwärtsfahrt die Radareinheit durch Steinschläge nicht beschädigt oder durch aufgewirbelten Schmutz bzw. Nässe nicht funktionsuntüchtig wird.

Weiterhin besteht ein Vorteil, wenn die zumindest eine Radareinheit im Gehäuse des Umschaltventils untergebracht ist. Dies erlaubt, dass eine nachträgliche Umrüstung bestehender Systeme sehr einfach möglich ist, weil dieses Umschaltventil einzig zwischen die Hydraulikleitungen vom Hauptbremszylinder zu den Radbremsen eingeschleift werden muss. Eine weitere und aufwendige Verkabelung der Radsensoren kann damit entfallen.

Weiterhin besteht ein Vorteil, wenn das Gehäuse des Umschaltventils ein Metallgehäuse ist, wobei das Metallgehäuse zumindest ein Fenster umfasst, dass aus einem Dielektrikum gebildet ist, wobei hinter diesem zumindest einen Fenster die zumindest eine Radareinheit angeordnet ist. Dadurch ist sichergestellt, dass das Umschaltventil sehr gut gegenüber äußeren Einflüssen geschützt ist. Weiterhin ist dadurch gewährleistet, dass die für die zumindest eine Radareinheit notwendige Elektronik gut gegenüber elektromagnetischen Störungen gesichert ist. Gleichzeitig können die von der Radareinheit abgegebenen Strahlenkegel problemlos das aus einem Dielektrikum bestehende Fenster im Metallgehäuse durchdringen.

Schließlich besteht ein Vorteil, wenn die Steuereinheit anhand der Informationen der Radareinheit neben einer Fahrtrichtung auch eine Geschwindigkeit und/oder einen Beladungszustand des Anhängers ermittelt. Insbesondere der Beladungszustand des Anhängers kann dahingehend verwendet werden, um den Bremsdruck in der Bremskraftübertragungseinrichtung entsprechend anzupassen.

Verschiedene Ausführungsbeispiele werden nachfolgend unter Bezugnahme auf die Zeichnung beispielhaft beschrieben. Gleiche Gegenstände weisen dieselben Bezugszeichen auf. Die entsprechenden Figuren der Zeichnungen zeigen im Einzelnen:
- Figur 1:: eine schematische Darstellung der erfindungsgemäßen Auflaufbremsanlage für einen Kraftfahrzeuganhänger;
- Figur 2A:: eine seitliche Ansicht von dem Gehäuse des Umschaltventils, welches gleichzeitig die zumindest eine Radareinheit enthält;
- Figur 2B:: eine weitere räumliche Ansicht des Umschaltventils, welches gleichzeitig die zumindest eine Radareinheit enthält;
- Figur 3:: einen Schnitt durch das Umschaltventil;
- Figur 4:: eine räumliche Ansicht, die zeigt, wie das Umschaltventil, welches die zumindest eine Radareinheit enthält, an einem Kraftfahrzeuganhänger angebracht werden kann;
- Figur 5:: eine seitliche Ansicht eines Kraftfahrzeuganhängers, in welcher die Abstrahlrichtung der zumindest einen Radareinheit zu erkennen ist;
- Figur 6:: eine Draufsicht auf einen Kraftfahrzeuganhänger in welchem die von der zumindest einen Radareinheit abgetastete Fläche auf dem Boden graphisch dargestellt ist; und
- Figur 7:: ein Beispiel, wie der von der zumindest einen Radareinheit abgegebene Strahlenkegel ausgeformt ist und unter welchem Winkel er die Fahrbahnoberfläche abtastet.

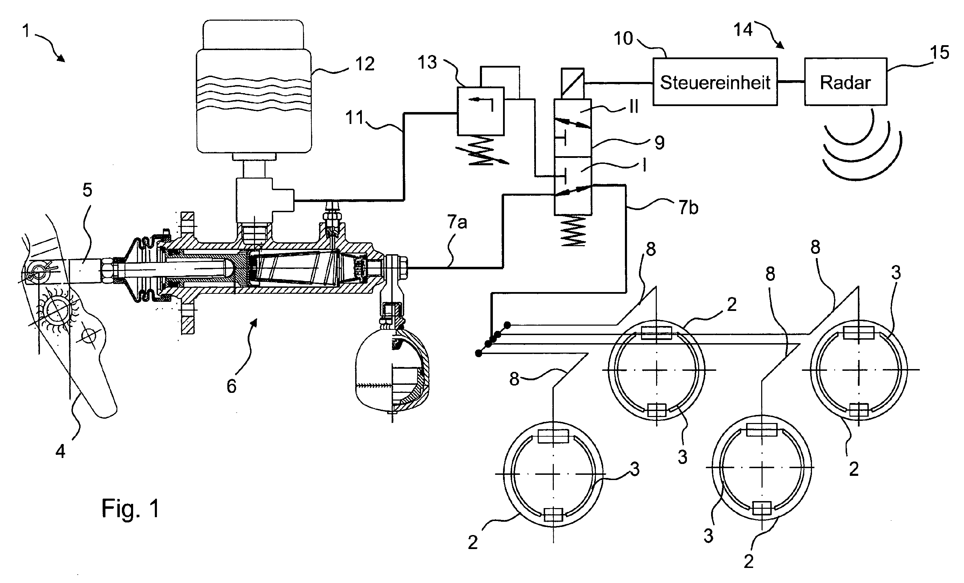

Figur 1 zeigt ein Ausführungsbeispiel der erfindungsgemäßen Auflaufbremsanlage 1 für einen Kraftfahrzeuganhänger. Der Anhänger umfasst dabei schematisch dargestellt vier Räder 2, die jeweils eine Radbremse 3 umfassen. Bei den Radbremsen 3 kann es sich insbesondere um Trommelbremsen oder Scheibenbremsen handeln. Weiterhin ist ein Bremshebel 4 dargestellt, der üblicherweise von einer nicht dargestellten, in einen Deichselkörper einschiebbaren Zugstange einer Anhängerdeichsel um eine an einem Deichselkörper gelagerte Achse geschwenkt werden kann, wenn das Zugfahrzeug abbremst und der Kraftfahrzeuganhänger gegen das Zugfahrzeug schiebt. Dabei wird ein Kolben 5 eines hydraulischen Hauptbremszylinders 6 in Längsrichtung nach hinten verschoben.

Der Hauptbremszylinder 6 ist über die Bremsleitungen 7a, 7b und die Zweigleitungen 8, die von der Bremsleitung 7b abzweigen, mit den hydraulisch betätigten Radbremsen 3 verbunden. Die Hydraulikverbindung zwischen den Bremsleitungen 7a und 7b wird mittels eines Umschaltventils 9 in der Form eines 4/2-Wegventils hergestellt, bzw. unterbrochen. Dieses 4/2-Wegventil kann mittels einer elektronischen Steuereinheit 10 zwischen zwei Schaltstellungen I und II umgeschaltet werden. Die in der Figur dargestellte Schaltstellung I wird bei Vorwärtsfahrt des Kraftfahrzeuganhängers geschaltet, während die Schaltstellung II bei Rückwärtsfahrt des Kraftfahrzeuganhängers eingenommen wird.

In der dargestellten Schaltstellung I ist die Bremsleitung 7a mit der Bremsleitung 7b verbunden, so dass die Bremsflüssigkeit vom Hauptbremszylinder 6 zu den Radbremsen 3 und zurück fließen kann. Wird die Auflaufeinrichtung durch Bremsen des Zugfahrzeuges zusammengeschoben, wird Bremsflüssigkeit vom Hauptbremszylinder 6 zu den Radbremsen gepumpt, wodurch die Radbremsen 3 aktiviert werden. Beendet das Zugfahrzeug den Bremsvorgang, so dass die Auflaufeinrichtung wieder auseinander gezogen wird, und sich der Kolben 5 wieder nach vorne bewegen kann, fließt die Bremsflüssigkeit von den Radbremsen 3 über die Bremsleitungen 7b, 7a zum Hauptbremszylinder 6 in bekannter Weise zurück.

Erkennt die Steuereinheit 10 jedoch anhand nachfolgend noch näher beschriebener Signale, dass der Anhänger zurückgesetzt werden soll, schaltet die Steuereinheit 10 das Umschaltventil 9 in die Schaltstellung II um. In dieser Schaltstellung ist Verbindung zwischen den Bremsleitungen 7a, 7b unterbrochen und eine Verbindung zwischen der von den Radbremsen 3 kommenden Bremsleitung 7b und einer Rückleitung 11 vorhanden, die zurück zu einem Flüssigkeitsvorratsbehälter 12 führt. In der Rückleitung 11 befindet sich eine Restdruckhalteeinrichtung in der Form eines Restdruckventils 13, welches den Rückfluss der Bremsflüssigkeit durch die Rückleitung 11 hindurch nur dann frei gibt, wenn der Druck innerhalb der Rückleitung 11 und damit innerhalb der Bremsleitung 7b oberhalb eines vorher eingestellten Minimaldruckwertes liegt. Dieser Minimaldruckwert entspricht zweckmäßigerweise demjenigen Druck, bei dem die Bremsbeläge gerade noch an den Reibflächen der Bremse anliegen, aber kaum mehr Bremsmoment erzeugen. Fließt dagegen aufgrund der Bewegung, welche die Bremselemente bei Lösen der Radbremsen 3 ausführen, soviel Bremsflüssigkeit zurück in den Flüssigkeitsvorratsbehälter 12, dass der Flüssigkeitsdruck in der Rückleitung 11 den Minimaldruckwert unterschreitet, so schließt das Restdruckventil 13, so dass das weitere Zurückfließen der Bremsflüssigkeit unterbunden wird. Ein unerwünschter Volumenverlust in der Bremsleitung 7b wird dadurch vermieden.

Um die Vorwärts- bzw. Rückwärtsfahrt oder den Stillstand des Anhängers erkennen zu können, ist die Steuereinheit 10 mit einem Bewegungserkennungssystem 14 elektrisch verbunden. Das Bewegungserkennungssystem 14 umfasst dabei zumindest eine Radareinheit 15. Diese zumindest eine Radareinheit 15 sendet Radarimpulse, also Strahlenkegel, aus, um dadurch die Fahrbahnoberfläche 53, auf der sich der Anhänger befindet abzutasten. Bei der zumindest einen Radareinheit 15 handelt es sich bevorzugt um ein 2-kanaliges Radar. Bevorzugt werden dabei Dopplerradare verwendet. Das Bewegungserkennungssystem 14 ermittelt aus den von der zumindest einen Radareinheit 15 erhaltenen Signalen, ob sich der Kraftfahrzeuganhänger im Stillstand befindet oder ob eine Vorwärts- bzw. Rückwärtsbewegung stattfindet. Das Bewegungserkennungssystem 14 kann neben der Bewegungsrichtung auch noch die Geschwindigkeit und/oder den Beladungszustand des Kraftfahrzeuganhängers ermitteln. Der Beladungszustand des Kraftfahrzeuganhängers wird dabei bevorzugt bei erkanntem Stillstand ermittelt werden. Dies erfolgt dadurch, dass die zumindest eine Radareinheit 15 aufgrund der durch die Beladung hervorgerufenen Neigung des Kraftfahrzeuganhängers eine Wegänderung der Radarsignale detektiert.

Der in der Rücklaufleitung 11 vorliegende Minimaldruck, welcher durch das Restdruckventil 13 einstellbar ist, kann durch die Steuereinheit 10 in Abhängigkeit des erkannten Beladungszustands geändert werden. Gleichzeitig ist die Steuereinheit 10 auch derart ausgebildet, dass diese in Abhängigkeit des ermittelten Beladungszustands des Anhängers den Bremsdruck in der Bremskraftübertragungseinrichtung im Bereich der Radbremsen 3 an den jeweiligen Beladungszustand anpasst.

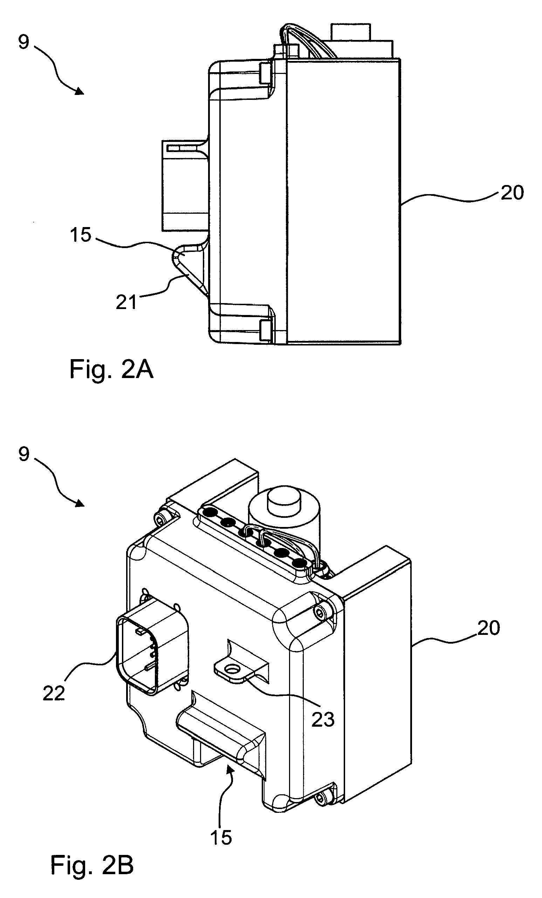

Figur 2A zeigt ein Ausführungsbeispiel für einen beispielhaften Aufbau des Umschaltventils 9 für die erfindungsgemäße Auflaufbremsanlage 1. Das Umschaltventil 9 kann auch für ältere Kraftfahrzeuganhänger einfach nachgerüstet werden. Das Umschaltventil 9 wird dabei in die vom Hauptbremszylinder 6 kommende Bremsleitung 7a und in die zu den Radbremsen führende Bremsleitung 7b eingesetzt. Gut zu erkennen ist, dass in dem Gehäuse 20 des Umschaltventils 9 die zumindest eine Radareinheit 15 untergebracht ist. Es ist ebenfalls möglich, dass in dem Gehäuse 20 noch zusätzlich das Restdruckventil 13 eingebracht ist. Innerhalb des Gehäuses 20 kann ebenfalls die Steuereinheit 10 eingesetzt sein. Die Steuereinheit 10 umfasst bevorzugt einen Mikrokontroller oder FPGA (engl. Field Programmable Gate Array; dt. im (Anwendungs-)Feld programmierbare (Logik-)Gatter-Anordnung). In diesem Fall muss das Gehäuse 20 einzig mit Strom versorgt werden. Innerhalb der Radareinheit 15 oder der Steuereinheit 10 kann das Bewegungserkennungssystem 14 ausgebildet sein, das die empfangenen Radarimpulse auswertet und eine Bewegungsrichtung, bzw. den Beladungszustand berechnet und an die Steuereinheit 10 ausgibt.

Das Gehäuse 20 des Umschaltventils 9 kann beispielsweise aus Plastik bestehen. Bevorzugt allerdings ist das Gehäuse 20 des Umschaltventils 9 ein Metallgehäuse, wobei das Metallgehäuse zumindest ein Fenster 21 aufweist, das aus einem Dielektrikum gebildet ist, wobei hinter diesem zumindest einen Fenster 21 die zumindest eine Radareinheit 15 angeordnet ist. Das zumindest eine Fenster 21 muss dabei so geschaffen sein, dass es in dem Frequenzbereich, in welchem die zumindest eine Radareinheit arbeitet, durchlässig für die elektromagnetische Strahlung ist, bzw. die Dämpfung vernachlässigbar bzw. der ordnungsgemäßen Funktionsweise ist.

Figur 2B zeigt ein weiteres Ausführungsbeispiel für eine weitere räumliche Ansicht des Gehäuses 20 des Umschaltventils 9, welches die zumindest eine Radareinheit 15 enthält. Gut zu erkennen ist ein Stecker 22 zur Stromversorgung. Über diesen Stecker 22 kann neben der Radareinheit 15, die Bestandteil des Bewegungserkennungssystems 14 ist, auch die Steuereinheit 10 mit Strom versorgt werden, die ebenfalls optional in dem Gehäuse 20 des Umschaltventils 9 angeordnet sein kann. Das Gehäuse 20 umfasst ebenfalls zumindest eine Befestigungsvorrichtung 23, über die das Gehäuse 20, also das Bewegungserkennungssystem 14 mit der Steuereinheit 10 und dem Umschaltventil 9 und optional dem Restdruckventil 13 an dem Kraftfahrzeuganhänger befestigt werden kann.

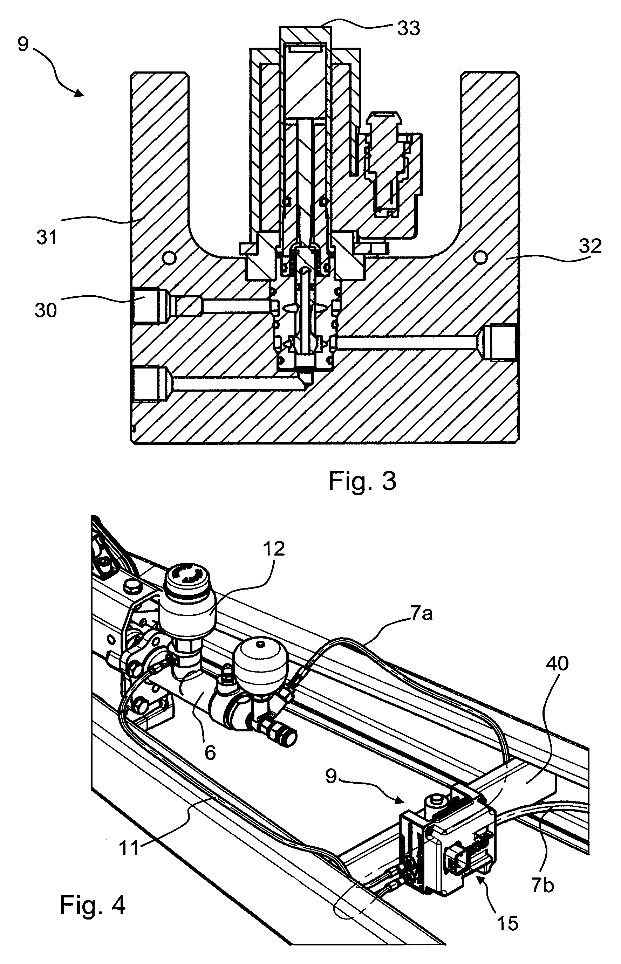

Figur 3 zeigt einen Schnitt durch das Umschaltventil 9. Gut zu erkennen ist ein erster Anschluss 30, der mit dem Hauptbremszylinder 6 der Auflaufbremsanlage 1 verbunden ist. Weiterhin ist ein zweiter Anschluss 31 zu erkennen, der mit dem Restdruckventil 13 verbunden ist. Über das Restdruckventil 13 ist der zweite Anschluss 31 mit dem Flüssigkeitsvorratsbehälter 12 verbunden. Ein dritter Anschluss 32 ist über die Bremsleitung 7b mit den Radbremsen 3 verbunden. Bei dem Umschaltventil 9 handelt es sich um ein elektromagnetisch angesteuertes Ventil. Je nach angelegter Spannung und des sich dabei einstellenden Stroms kann der Ventilkörper 33 je nach Ausführungsform entweder gedreht oder in seiner axialen Position innerhalb des Umschaltventils 9 verschoben werden. Dadurch wird in der Schaltstellung I der erste Anschluss 30 mit dem dritten Anschluss 32 verbunden. In der Schaltstellung II wird der zweite Anschluss 31 mit dem dritten Anschluss 32 verbunden. Das Schaltverhalten des Umschaltventils 9 wird dabei durch die Steuereinheit 10 vorgegeben.

Figur 4 zeigt ein Ausführungsbeispiel für ein Teil des Kraftfahrzeuganhängers, an welchem das Gehäuse 20 des Umschaltventils 9 montiert worden ist. Mit dem Hauptbremszylinder 6 ist der Flüssigkeitsvorratsbehälter 12 verbunden. Von dem Hauptbremszylinder 6 geht die Bremsleitung 7a in Richtung des Gehäuses 20 des Umschaltventils 9. Ebenfalls ist die Rückleitung 11 zu erkennen, in die das in Figur 4 nicht dargestellte Restdruckventil 13 eingebracht ist. Das Umschaltventil 9 verbindet dabei die Bremsleitungen 7a und 7b, bzw. die Bremsleitung 7b und die Rückleitung 11 miteinander. Das Gehäuse 20 des Umschaltventils 9 ist mechanisch fest mit einem Querrahmen 40 einer Deichsel des Kraftfahrzeuganhängers verbunden. Die zumindest eine Radareinheit 15 gibt ihren Strahlenkegel schräg nach hinten in Richtung der Fahrbahnoberfläche 53 ab. Unter dem Wortlaut "nach hinten" ist zu verstehen, dass die zumindest eine Radareinheit die Fahrbahnoberfläche 53 in der Richtung abtastet, in der im Fall des Zurücksetzens der Kraftfahrzeuganhänger zurückgesetzt wird. Dabei ist zu beachten, dass das Gehäuse 20 des Umschaltventils 9 sehr einfach nachgerüstet werden kann.

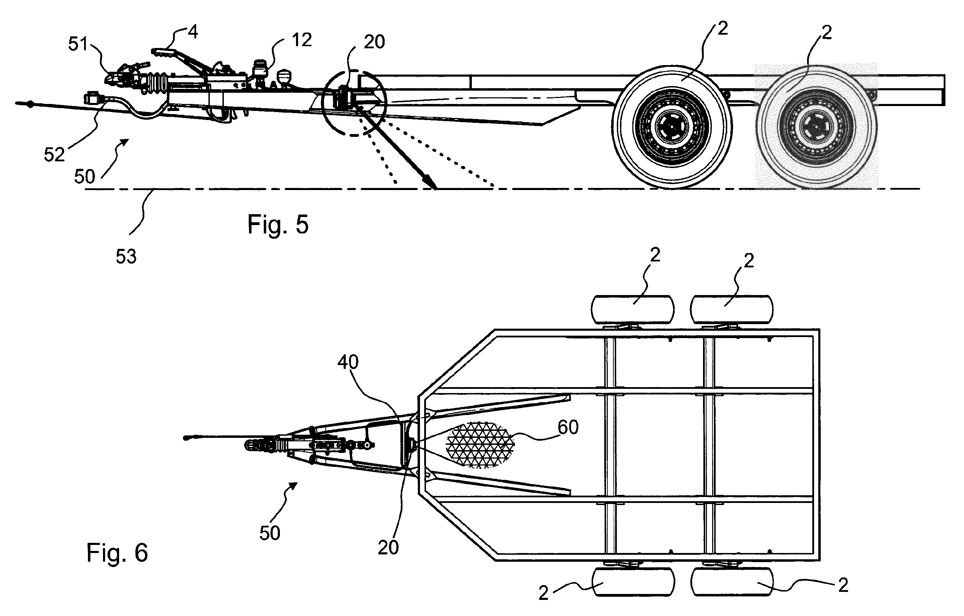

Figur 5 zeigt ein Ausführungsbeispiel für eine seitliche Ansicht des Kraftfahrzeuganhängers, welcher mit dem erfindungsgemäßen Umschaltventil 9, welches die zumindest eine Radareinheit 15 enthält, ausgerüstet ist. Am vorderen Ende der Deichsel 50 ist eine Kugelkopfkupplung 51 vorgesehen. Ebenfalls zu erkennen ist der Bremshebel 4 und das Kabel für die Stromversorgung 52. Dargestellt ist außerdem, dass der von der zumindest einen Radareinheit 15 abgegebene Strahlenkegel schräg nach hinten in Richtung der Fahrbahnoberfläche 53 gerichtet ist. Die Hauptkeule 70 ist dabei mit einem Pfeil eingezeichnet. Gestrichelt eingezeichnet ist der Bereich, der von dem Strahlenkegel der zumindest einen Radareinheit 15 durchdrungen wird. Dieser gestrichelte Bereich muss von weiteren Teilen, insbesondere von solchen, die in dem Frequenzbereich, in welchem die zumindest eine Radareinheit 15 arbeitet, elektrisch leiten, freigehalten werden.

Figur 6 zeigt eine Draufsicht auf einen Kraftfahrzeuganhänger 60 welcher in diesem Beispiel über vier Räder 2 verfügt. Das Gehäuse 20 des erfindungsgemäßen Umschaltventils 9, welches die zumindest eine Radareinheit 15 enthält, ist an dem Querrahmen 40 der Deichsel 50 befestigt. Die durch die zumindest eine Radareinheit 15 abgetastete Fläche 60 auf der Fahrbahnoberfläche 53 besitzt die Form eines Ovals. Es kann je nach Gestaltung der zumindest einen Radareinheit 15 ebenfalls möglich sein, dass die abgetastete Fläche 60 auf der Fahrbahnoberfläche 53 die Form einer Raute oder allgemein eines Vierecks aufweist.

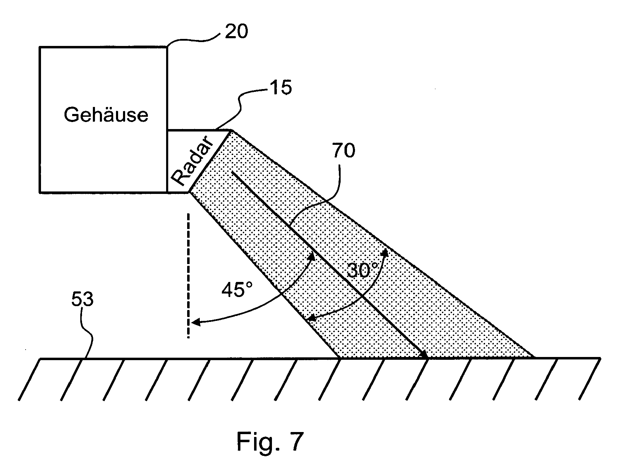

Figur 7 zeigt schematisch ein Ausführungsbeispiel des Gehäuses 20 des Umschaltventils 9 mit der zumindest einen Radareinheit 15, sowie der bevorzugten Abstrahlrichtung der zumindest einen Radareinheit 15. Gepunktet dargestellt ist dabei der Bereich, welcher vom Strahlenkegel, der von der zumindest einen Radareinheit 15 ausgesendet wird, durchdrungen wird. Zu erkennen ist, dass die Hauptkeule 70 der zumindest einen Radareinheit 15 in einem Winkel von bevorzugt 45° in Richtung der Fahrbahnoberfläche 53 gebildet ist. In Richtung der Hauptkeule 70 kann die zumindest eine Radareinheit 15 dabei die meiste Energie senden bzw. in dieser Richtung liegt die maximale Empfangsempfindlichkeit vor. Die Hauptkeule 70 kann weiterhin in einem Bereich von 30° bis 60°, bevorzugt von 40° bis 50° in Richtung der Fahrbahnoberfläche 53 gebildet sein.

Die Hauptkeule 70 der zumindest einen Radareinheit 15 weist eine Breite von mehr als 15° und weniger als 45° auf. Bevorzugt weist die Hauptkeule 70 eine Breite von mehr als 20° und weniger als 40° auf. Weiter bevorzugt weist die Hauptkeule 70 eine Breite von mehr als 25° und weniger als 35° auf. In dem dargestellten Ausführungsbeispiel aus Figur 7 ist die bevorzugte Breite der Hauptkeule 70 30°.

Weiterhin arbeitet das Bewegungserkennungssystem 14 am genauesten, wenn die Radareinheit 15 in einem Abstand von 150 mm bis 700 mm, bevorzugt 200 mm bis 600 mm, weiter bevorzugt 300 mm bis 500 mm, weiter bevorzugt 400 mm über der Fahrbahnoberfläche 53 angeordnet ist.

Die Erfindung ist nicht auf die beschriebenen Ausführungsbeispiele beschränkt. Im Rahmen der Erfindung sind alle beschrieben und/oder gezeichneten Merkmale beliebig miteinander kombinierbar.

## Patentansprüche

1. Auflaufbremsanlage für Kraftfahrzeuganhänger mit:
- einer hydraulischen Bremskraftübertragungseinrichtung,
- einer Steuereinheit (10),
- einem in der Bremskraftübertragungseinrichtung angeordneten Umschaltventil (9), das von der Steuereinheit (9) in Abhängigkeit der Bewegungsrichtung des Kraftfahrzeuganhängers geschaltet ist, und
- einem Bewegungserkennungssystem (14) zum Erkennen des Stillstands oder einer Bewegungsrichtung des Kraftfahrzeuganhängers,
**dadurch gekennzeichnet, dass** das Bewegungserkennungssystem (14) eine die Fahrbahnoberfläche (53) abtastende Radareinheit (15) umfasst.

2. Auflaufbremsanlage nach Anspruch 1, **dadurch gekennzeichnet, dass** die durch die zumindest eine Radareinheit (15) abgetastete Fläche (60) auf der Fahrbahnoberfläche (53) die Form eines Ovals oder einer Raute oder eines Vierecks aufweist.

3. Auflaufbremsanlage nach Anspruch 1 oder 2, **dadurch gekennzeichnet, dass** der von der zumindest einen Radareinheit (15) abgegebene Strahlenkegel schräg nach hinten in Richtung der Fahrbahnoberfläche (53) gerichtet ist.

4. Auflaufbremsanlage nach einem der Ansprüche 1 bis 3, **dadurch gekennzeichnet, dass** eine Hauptkeule (70) der zumindest einen Radareinheit (15) in einem Winkel von 30° bis 60°, bevorzugt 40° bis 50°, weiter bevorzugt 45° in Richtung der Fahrbahnoberfläche (53) gebildet ist.

5. Auflaufbremsanlage nach einem der Ansprüche 1 bis 4, **dadurch gekennzeichnet, dass** die Hauptkeule (70) der zumindest einen Radareinheit (15) eine Breite von mehr als 15° und weniger als 45°, bevorzugt mehr als 20° und weniger als 40°, weiter bevorzugt mehr als 25° und weniger als 35°, weiter bevorzugt 30° aufweist.

6. Auflaufbremsanlage nach einem der Ansprüche 1 bis 5, **dadurch gekennzeichnet, dass** die Radareinheit (15) in einem Abstand von 150 mm bis 700 mm, bevorzugt 200 mm bis 600 mm, weiter bevorzugt 300 mm bis 500 mm, weiter bevorzugt 400 mm über der Fahrbahnoberfläche (53) angeordnet ist.

7. Auflaufbremsanlage nach einem der vorherigen Ansprüche, **dadurch gekennzeichnet, dass** die zumindest eine Radareinheit (15) in dem Gehäuse (20) des Umschaltventils (9) untergebracht ist.

8. Auflaufbremsanlage nach Anspruch 7, **dadurch gekennzeichnet, dass** das Gehäuse (20) des Umschaltventils (9) ein Plastikgehäuse ist.

9. Auflaufbremsanlage nach Anspruch 7, **dadurch gekennzeichnet, dass** das Gehäuse (20) des Umschaltventils (9) ein Metallgehäuse ist, wobei das Metallgehäuse zumindest ein Fenster (21) umfasst, das aus einem Dielektrikum gebildet ist, wobei hinter diesem zumindest einen Fenster (21) die zumindest eine Radareinheit (15) angeordnet ist.

10. Auflaufbremsanlage nach einem der vorherigen Ansprüche, **dadurch gekennzeichnet, dass** die Steuereinheit (10) anhand der Informationen der Radareinheit (15) neben der Bewegungsrichtung auch eine Geschwindigkeit und/oder einen Beladungszustand des Anhängers ermittelt.

11. Auflaufbremsanlage nach Anspruch 10, **dadurch gekennzeichnet, dass** in einer Rücklaufleitung (11) der hydraulischen Bremskraftübertragungseinrichtung ein Restdruckventil (13) vorgesehen ist, das im Fall des Zurücksetzens des Anhängers den Hydraulikdruck in der Bremskraftübertragungseinrichtung im Bereich der Radbremsen (3) zumindest auf dem minimalen Druckwert hält, bei dem die Radbremsen (3) gerade noch in Bremseingriff sind, wobei der minimale Druckwert durch die Steuereinheit (10) in Abhängigkeit des erkannten Beladungszustands einstellbar ist.

12. Auflaufbremsanlage nach Anspruch 10 oder 11, **dadurch gekennzeichnet, dass** die Steuereinheit (10) derart ausgebildet ist, dass diese in Abhängigkeit des ermittelten Beladungszustands des Anhängers den Bremsdruck in der Bremskraftübertragungseinrichtung (DEF) im Bereich der Radbremsen (3) an den jeweiligen Beladungszustand anpasst.

13. Auflaufbremsanlage nach einem der vorherigen Ansprüche, **dadurch gekennzeichnet, dass** es sich bei der Radareinheit (15) um ein 2-kanaliges Radar, insbesondere ein Dopplerradar, handelt.

## Claims

1. An inertia braking system for motor vehicle trailers comprising:
- a hydraulic braking force transmitting means,
- a control unit (10),
- a switchover valve (9) disposed in the braking force transmitting means, and controlled by the control unit (9) based on the direction of travel of the motor vehicle trailer, and
- a motion detection system (14) for detecting the stoppage or a direction of travel of the motor vehicle trailer,
**characterized in that** the motion detection system (14) comprises a radar unit (15) for scanning the road surface (53).

2. The inertia braking system according to claim 1, **characterized in that** the area (60) of the road surface (53) that is scanned by the at least one radar unit (15) has the shape of an oval, a rhombus or a quadrilateral.

3. The inertia braking system according to claim 1 or 2, **characterized in that** the beam cone emitted by the at least one radar unit (15) is directed obliquely rearward in the direction of the road surface (53).

4. The inertia braking system according to any of claims 1 to 3, **characterized in that** a main lobe (70) of the at least one radar unit (15) is formed at an angle of 30° to 60°, preferably of 40° to 50°, more preferably of 45° in the direction of the road surface (53).

5. The inertia braking system according to any of claims claim 1 to 4, **characterized in that** the main lobe (70) of the at least one radar unit (15) has a width of greater than 15° and less than 45°, preferably of greater than 20° and less than 40°, more preferably of greater than 25° and less than 35°, and more preferably still of 30°.

6. The inertia braking system according to any of claims 1 to 5, **characterized in that** the radar unit (15) is situated at a distance of 150 mm to 700 mm, preferably of 200 mm to 600 mm, more preferably of 300 mm to 500 mm, and more preferably still of 400 mm above the road surface (53).

7. The inertia braking system according to any of the preceding claims, **characterized in that** the at least one radar unit (15) is housed in the casing (20) of the switchover valve (9).

8. The inertia braking system according to claim 7, **characterized in that** the casing (20) of the switchover valve (9) is a plastic casing.

9. The inertia braking system according to claim 7, **characterized in that** the casing (20) of the switchover valve (9) is a metal casing, wherein the metal casing has at least one window (21) which is made of a dielectric material, and wherein the at least one radar unit (15) is disposed behind said at least one window (21).

10. The inertia braking system according to any of the preceding claims, **characterized in that** the control unit (10) determines a speed and/or a load condition of the trailer, in addition to the direction of travel, based on the information from the radar unit (15).

11. The inertia braking system according to claim 10, **characterized in that** in a return line (11) of the hydraulic braking force transmitting means, a residual pressure valve (13) is provided, which, when the trailer is traveling in reverse, holds the hydraulic pressure in the braking force transmitting means in the region of the trailer wheel brakes (3) to at least the minimum pressure level at which the wheel brakes (3) are still in braking engagement, wherein the minimum pressure level can be adjusted by the control unit (10) based on the detected load condition.

12. The inertia braking system according to claim 10 or 11, **characterized in that** the control unit (10) is designed, based on the detected load condition of the trailer, to adjust the braking pressure in the braking force transmitting means (DEF) in the region of the wheel brakes (3) to the respective load condition.

13. The inertia braking system according to any of the preceding claims, **characterized in that** the radar unit (15) is a 2-channel radar unit, in particular a Doppler radar unit.

## Revendications

1. Installation de freinage à inertie pour remorque de véhicule de mobile, comprenant :
- un système hydraulique de transmission de force de freinage,
- une unité de commande (10),
- une soupape d'inversion (9) agencée dans le système de transmission de force de freinage, qui est commutée par l'unité de commande (9) en fonction de la direction de déplacement de la remorque de véhicule automobile, et
- un système de reconnaissance de déplacement (14) pour reconnaître l'immobilité ou une direction de déplacement de la remorque de véhicule automobile,
**caractérisée en ce que** le système de reconnaissance de déplacement (14) inclut une unité radar (15) qui balaye la surface de la chaussée (53).

2. Installation de freinage à inertie selon la revendication 1, **caractérisée en ce que** la surface (60) balayée par ladite au moins une unité radar sur la surface de la chaussée (53) présente la forme d'un ovale ou d'un losange ou d'un rectangle.

3. Installation de freinage à inertie selon la revendication 1 ou 2, **caractérisée en ce que** le cône de rayonnement émis par ladite au moins une unité radar (15) est orienté en oblique vers l'arrière en direction de la surface de la chaussée (53).

4. Installation de freinage à inertie selon l'une des revendications 1 à 3, **caractérisée en ce qu'**un lobe principal (70) de ladite au moins une unité radar (15) est formé sous un angle de 30° à 60°, de préférence 40° à 50°, et de manière encore préférée 45° en direction de la surface de la chaussée (53).

5. Installation de freinage à inertie selon l'une des revendications 1 à 4, **caractérisée en ce que** le lobe principal (70) de ladite au moins une unité radar (15) présente une largeur de plus de 15° et moins de 45°, de préférence plus de 20° et moins de 40°, de manière plus préférée plus de 25° et moins de 35°, et de manière encore préférée de 30°.

6. Installation de freinage à inertie selon l'une des revendications 1 à 5, **caractérisée en ce que** l'unité radar (15) est agencée à une distance de 150 mm à 700 mm, de préférence 200 mm à 600 mm, de manière plus préférée 300 mm à 500 mm, et de manière encore préférée 400 mm au-dessus de la surface de la chaussée (53).

7. Installation de freinage à inertie selon l'une des revendications précédentes, **caractérisée en ce que** ladite au moins une unité radar (15) est logée dans le boîtier (20) de la soupape d'inversion (9).

8. Installation de freinage à inertie selon la revendication 7, **caractérisée en ce que** le boîtier (20) de la soupape d'inversion (9) est un boîtier en matière plastique.

9. Installation de freinage à inertie selon la revendication 7, **caractérisée en ce que** le boîtier (20) de la soupape d'inversion (9) est un boîtier en métal, tel que le boîtier en métal comporte au moins une fenêtre (21) qui est formée par un matériau diélectrique et ladite au moins une unité radar (15) est agencée derrière ladite au moins une fenêtre (21).

10. Installation de freinage à inertie selon l'une des revendications précédentes, **caractérisée en ce que** l'unité de commande (10) détermine, au moyen des informations de l'unité radar (15), outre la direction de déplacement, également une vitesse et/ou un état de chargement de la remorque.

11. Installation de freinage à inertie selon la revendication 10, **caractérisée en ce qu'**une soupape de pression résiduelle (13) est prévu dans une conduite de retour (11) du système hydraulique de transmission de force de freinage, soupape qui, dans le cas du dételage de la remorque, maintient la pression hydraulique dans le système de transmission de force de freinage dans la zone des freins de roues (3) au moins à une valeur de pression minimum à laquelle les freins de roues (3) sont encore tout juste en engagement de freinage, ladite valeur de pression minimum étant réglable par l'unité de commande (10) en fonction de l'état de chargement reconnu.

12. Installation de freinage à inertie selon la revendication 10 ou 11, **caractérisée en ce que** l'unité de commande (10) est réalisée de telle façon que celle-ci ajuste, en fonction de l'état de chargement déterminé de la remorque, la pression de freinage dans le système de transmission de force de freinage (DEF) dans la zone des freins de roues (3) à l'état de chargement respectif.

13. Installation de freinage à inertie selon l'une des revendications précédentes, **caractérisée en ce que** l'unité radar (15) et un radar à deux canaux, en particulier un radar Doppler.
